Europäisches Patentamt

(19) European Patent Office

Office européen des brevets

(11) Numéro de publication : **0 298 817 B1**

(12)                 **FASCICULE DE BREVET EUROPEEN**

(45) Date de publication du fascicule du brevet :
**15.01.92 Bulletin 92/03**

(51) Int. Cl.[5] : **H01J 3/02,** H01J 1/34,
H01J 23/04, H01S 3/09

(21) Numéro de dépôt : **88401584.3**

(22) Date de dépôt : **23.06.88**

(54) **Procédé et dispositif de production d'électrons utilisant un couplage de champ et l'effet photoélectrique.**

(30) Priorité : **25.06.87 FR 8708946**

(43) Date de publication de la demande :
**11.01.89 Bulletin 89/02**

(45) Mention de la délivrance du brevet :
**15.01.92 Bulletin 92/03**

(84) Etats contractants désignés :
**CH DE GB IT LI**

(56) Documents cités :
**DE-A- 3 038 405
PHYSICAL REVIEW LETTERS, vol. 38, no. 1, 3
janvier 1977, pages 40-43, New York, US; M.
WAUTELET et al.: "Laser-modulated photoemission in semiconductors"
JAPANESE JOURNAL OF APPLIED PHYSICS,
vol. 12, no. 7, juillet 1973, pages 1001-1010,
Tokyo, JP; F. SHISHIDO: "The possibility of
field emission from metal surface with a Q-
switched laser pulse"**

(56) Documents cités :
**LASER FOCUS, vol. 19, no. 7, juillet 1983,
pages 10-14, Newton, Massachusetts, US; P.
OETTINGER: "Laser-activated electron sources for FELs"**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**

(72) Inventeur : **Girardeau-Montaut, Jean-Pierre
18, Boulevard des Belges
F-69006 Lyon (FR)**
Inventeur : **Girardeau-Montaut, Claire
18, Boulevard des Belges
F-69006 Lyon (FR)**
Inventeur : **Erbeia, Angelo
6, rue René Blanc
F-74100 Annemasse (FR)**

(74) Mandataire : **Mongrédien, André et al
c/o BREVATOME 25, rue de Ponthieu
F-75008 Paris (FR)**

**Description**

La présente invention concerne un procédé et un dispositif de production d'électrons de grande intensité, utilisant un couplage de champ et l'effet photoélectrique selon les revendications 1 et 6.

Elle trouve des applications dans tous les domaines où l'on a besoin de courants électroniques de grande densité et s'applique notamment à la réalisation de sources d'électrons pour certains accélérateurs de particules, les lasers à électrons libres, certains lasers à gaz (par exemple du type excimère) et les tubes haute fréquence de grande puissance : type KLYSTRON ou LASERTRON.

On connaît déjà différentes techniques de production d'électrons. Ces techniques utilisent respectivement l'effet thermo-ionique, l'effet photoélectrique et l'effet de champ. Par exemple le document DE-A-3038405 décrit un émetteur-HF d'électrons comprenant un émetteur de lumière, par exemple un laser pulsé, et un substrat photoélectrique recevant cette lumière et émettant les électrons.

Cependant, aucune de ces techniques connues n'est adaptée à la production de courants électroniques de très grande densité et sous forme d'impulsions de très courte durée et de grande fréquence.

La présente invention a pour but de remédier à cet inconvénient.

Elle a tout d'abord pour objet un procédé de production d'électrons de grande intensité, de préférence de l'ordre de 200 à 300 A · cm⁻², comprenant l'envoi, sous incidence rasante, d'un premier rayonnement du domaine infrarouge proche ou lointain, polarisé rectilignement, sur une cible faite d'un matériau non électriquement isolant et, simultanément, l'envoi sur ladite cible, sous incidence non rasante, d'un second rayonnement du domaine visible ou ultraviolet, et de telle façon qu'une même zone de la cible soit atteinte par le premier et le second rayonnements, le plan de polarisation du premier rayonnement étant en outre tel qu'il contienne une normale à ladite zone, cette zone produisant alors des électrons.

Par "matériau non-électriquement isolant", on entend soit un matériau électriquement conducteur tel qu'un matériau métallique (métal pur ou un alliage métallique) soit un matériau semi-conducteur.

La cible peut se présenter sous la forme d'une pièce massive, auquel cas le mot "zone" désigne une portion superficielle de cette cible, ou sous la forme d'une couche mince dont l'épaisseur est de l'ordre de 100 nm (nanomètres) à 1 μm (micromètre) et qui est formée sur un substrat (ce dernier pouvant être opaque ou au contraire transparent au second rayonnement), auquel cas le mot "zone" désigne une portion volumique de la cible.

Cette dernière est bien entendu suffisamment plane, au moins dans ladite zone, afin de pouvoir définir une normale, ou perpendiculaire, à cette zone.

Par "incidence rasante" on entend une incidence dont l'angle est au moins égal à environ 85° et par "incidence non rasante", on entend une incidence dont l'angle est au plus égal à environ 70°.

La polarisation particulière du premier rayonnement, dite "polarisation parallèle", et le fait que ce premier rayonnement atteigne ladite zone qui est commune aux deux rayonnements, sous incidence rasante, implique que le champ électrique correspondant au premier rayonnement est sensiblement perpendiculaire à ladite zone et que le premier rayonnement crée donc avec cette zone ce que l'on appelle un couplage de champ.

Ce dernier a pour fonction d'abaisser la barrière de potentiel "vue" par les électrons de conduction contenus dans ladite zone.

Le second rayonnement, envoyé simultanément au premier, a pour fonction d'exciter par effet photoélectrique ces électrons, l'extraction de ceux-ci se faisant donc dans des conditions de rendement quantique accru.

On comprend donc que la combinaison du premier et du second rayonnements puisse permettre d'obtenir un courant électronique de forte densité, pourvu que les intensités respectives de ces rayonnements soient suffisamment importantes, et que ce courant puisse être produit sous la forme d'impulsions de très courte durée et de grande fréquence, pour peu que les rayonnements soient pulsés (ce qui facilite d'ailleurs l'obtention d'intensités importantes pour les rayonnements) et que la durée et la fréquence des impulsions lumineuses correspondantes soient convenablement choisies.

L'invention peut ainsi permettre d'obtenir des courants électroniques de densité au moins égale à 100 A · cm⁻², sous la forme de trains d'impulsions dont la fréquence de répétition est comprise dans le domaine s'étendant de 1 MHz à 3 GHz et dont la durée de chaque impulsion est inférieure à 1 ns (nanoseconde).

En outre, il résulte des deux effets physiques combinés dans la présente invention que celle-ci peut permettre de produire des courants électroniques de grande densité sans détruire ni modifier la cible, ni polluer l'environnement de celle-ci et ce, pendant plusieurs heures, alors que les techniques connues mentionnées plus haut provoqueraient des modifications, ou détruiraient, et ce rapidement, les matériaux producteurs d'électrons qu'elles utilisent, si l'on cherchait à obtenir avec ces techniques des courants électroniques de densités comparables.

On a déjà indiqué que le premier et le second rayonnements pouvaient être pulsés.

De préférence, le premier rayonnement est pulsé à une fréquence de l'ordre de 100 Hz à 1 kHz et le second rayonnement est pulsé à une fréquence de l'ordre de 1 MHz à 3 GHz.

Le courant électronique, dont les caractéristiques temporelles représentent la convolution des caractéristiques temporelles des deux rayonnements, est alors produit sous forme d'impulsions élémentaires de grande fréquence de modulation, égale à la fréquence de modulation du second rayonnement, impulsions élémentaires regroupées en trains dont la longueur et la fréquence de répétition sont voisines de celles du premier rayonnement.

Les impulsions du courant électronique produit peuvent donc avoir une très faible durée (en choisissant par exemple la durée des impulsions du second rayonnement au plus égale à environ 1 ns).

Selon un mode de mise en oeuvre préféré du procédé objet de l'invention, l'intensité crête des impulsions du premier rayonnement est de l'ordre de 1 $MW \cdot cm^{-2}$ à $5\ GW \cdot cm^{-2}$ et l'intensité crête des impulsions du second rayonnement est de l'ordre de 1 kW $\cdot cm^{-2}$ à $1\ MW \cdot cm^{-2}$.

On obtient alors un courant électronique impulsionnel de très grande densité.

La présente invention a également pour objet un dispositif de production d'électrons de grande intensité, de préférence de l'ordre de 200 à $300\ A \cdot cm^{-2}$, comprenant :

— une cible faite d'un matériau non électriquement isolant,

— un premier moyen prévu pour produire un premier rayonnement du domaine infrarouge proche ou lointain, polarisé rectilignement, et envoyer celui-ci sur la cible, et

— un second moyen prévu pour produire un second rayonnement du domaine visible ou ultraviolet et envoyer celui-ci sur la cible,

le premier et le second moyens étant agencés de telle façon que le premier et le second rayonnements puissent atteindre une même zone de la cible, le plan de polarisation du premier rayonnement étant en outre tel qu'il contienne une normale à ladite zone, de telle sorte que cette zone émet des électrons lorsque le premier et le second rayonnements sont envoyés simultanément sur la cible.

Selon un mode de réalisation particulier du dispositif objet de l'invention, la cible est une couche mince dudit matériau, déposée sur un substrat transparent au second rayonnement, le premier moyen est prévu pour envoyer le premier rayonnement sur la face libre de la couche mince et le second moyen est prévu pour envoyer le second rayonnement sur la cible à travers le substrat.

De préférence, le premier et le second moyens sont prévus pour produire des rayonnements pulsés.

On peut bien entendu prévoir des moyens de réglage de la durée et de la fréquence des impulsions lumineuses résultantes, ce qui permet d'obtenir un courant électronique impulsionnel dont les impulsions sont réglables en fréquence et en durée.

Selon un autre mode de réalisation particulier du dispositif objet de l'invention, le premier moyen comprend un premier laser qui est pulsé, apte à émettre dans le domaine infrarouge proche ou lointain et muni de moyens de polarisation rectiligne du rayonnement qu'il est capable d'émettre.

Enfin, selon un autre mode de réalisation particulier, le second moyen comprend un second laser qui est continu et à modes verrouillés et qui est suivi successivement :

— de moyens de déclenchement (Q-switching selon la terminologie anglo-saxonne) du second laser,

— de moyens d'amplification de l'intensité du rayonnement issu des moyens de déclenchement, et

— de moyens d'augmentation de la fréquence de ce rayonnement.

La présente invention sera mieux comprise à la lecture de la description qui suit, d'exemples de réalisation donnés à titre purement illustratif et nullement limitatif, en référence aux dessins annexés sur lesquels :

— la figure 1 est une vue schématique et partielle d'un dispositif conforme à l'invention,

— la figure 2A illustre schématiquement les impulsions lumineuses d'un premier rayonnement utilisé dans ce dispositif,

— la figure 2B illustre schématiquement les impulsions lumineuses d'un second rayonnement également utilisé dans ce dispositif,

— la figure 2C illustre schématiquement les impulsions du courant électronique que ce dispositif est capable de produire,

— la figure 3 est une vue schématique plus détaillée du dispositif de la figure 1, et

— la figure 4 illustre schématiquement un autre mode de réalisation particulier du dispositif objet de l'invention.

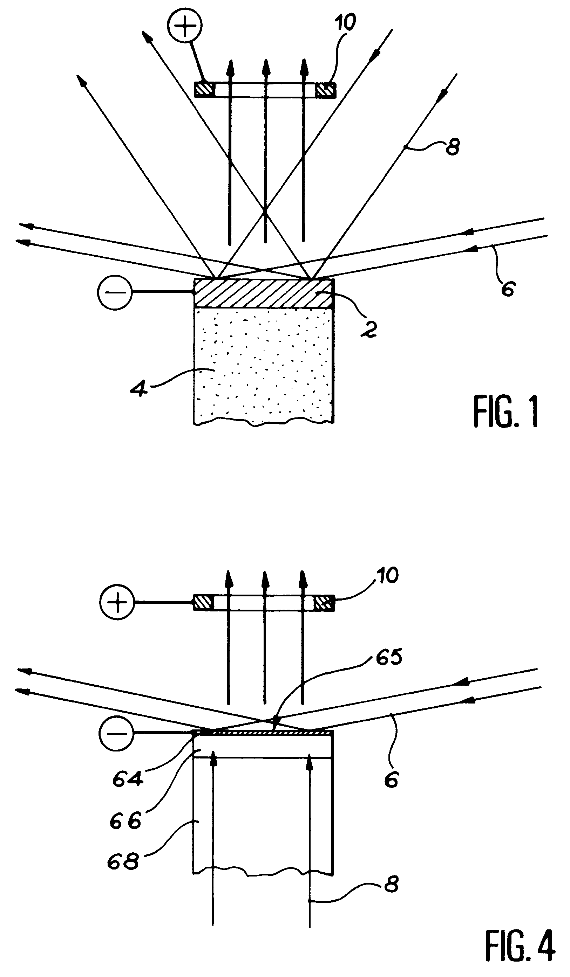

Sur la figure 1, on a représenté schématiquement et partiellement un mode de réalisation particulier du dispositif objet de l'invention, qui comprend une cible 2 massive, par exemple métallique, qui est montée sur un support 4 et dont la surface est sensiblement plane.

On envoie sur cette surface, sous incidence rasante, un premier rayonnement 6 infrarouge, de longueur d'onde comprise par exemple entre 5 μm (micromètres) et 500 μm (micromètres), pulsé à une fréquence de l'ordre de 100 Hz à 1 kHz. L'intensité crête des impulsions de ce premier rayonnement est de préférence supérieure à environ $1\ MW \cdot cm^{-2}$ afin que ce premier rayonnement soit suffisamment efficace, et inférieure au seuil d'intensité au delà duquel la cible serait endommagée, une intensité inférieure à $5\ GW \cdot cm^{-2}$ convenant généralement à cet effet. En outre, la durée de chaque impulsion est de l'ordre de 10 à 100 μs (microsecondes).

Le premier rayonnement 6 est en outre polarisé linéairement, de telle manière que le plan de polarisation contienne une normale à la surface de la cible 2. Ceci, joint à l'incidence rasante, fait que le premier rayonnement crée avec la surface de la cible un couplage de champ. Un champ électrique intense est ainsi créé sensiblement perpendiculairement à la surface de la cible et ce champ permet d'abaisser la barrière de potentiel "vue" par les électrons de conduction de la cible, se trouvant au voisinage de la surface de cette cible.

Simultanément, on envoie sur cette surface un second rayonnement 8 du domaine visible ou ultraviolet, la longueur d'onde de ce second rayonnement étant inférieure ou égale à environ 530 nm (nanomètres), sous la forme d'un train continu d'impulsions courtes, dont la durée est au plus égale à environ 1 ns (nanoseconde) et dont la fréquence de répétition peut être ajustée entre 1 MHz et 3 GHz environ. En outre, l'intensité crête de chaque impulsion de ce second rayonnement est de préférence supérieure à $1 \text{ kW} \cdot \text{cm}^{-2}$ pour avoir une efficacité convenable, et inférieure à $1 \text{ MW} \cdot \text{cm}^{-2}$ afin de ne pas endommager la cible. En outre, ce second rayonnement est envoyé sur la cible de façon qu'une même portion de surface de celle-ci soit "éclairée" par les deux rayonnements. Le second rayonnement est de plus envoyé sur la cible 2 sous un angle d'incidence au plus égal à 70° environ, par exemple 45°, ou nul.

Le second rayonnement permet d'extraire par effet photoélectrique des électrons de conduction de la cible à un moment où la barrière de potentiel "vue" par ceux-ci à la surface de la cible est abaissée sous l'effet du premier rayonnement, donc dans des conditions de rendement quantique accru.

Les électrons sont produits sous la forme de trains d'impulsions de courant dont l'intensité crête peut être de l'ordre de 200 à 300 $\text{A} \cdot \text{cm}^{-2}$ et dont les caractéristiques temporelles sont voisines de celles du second rayonnement. Une modulation des trains d'impulsion de courant, à une fréquence de l'ordre de 100 Hz à 1 kHz est en outre imposée par le premier rayonnement.

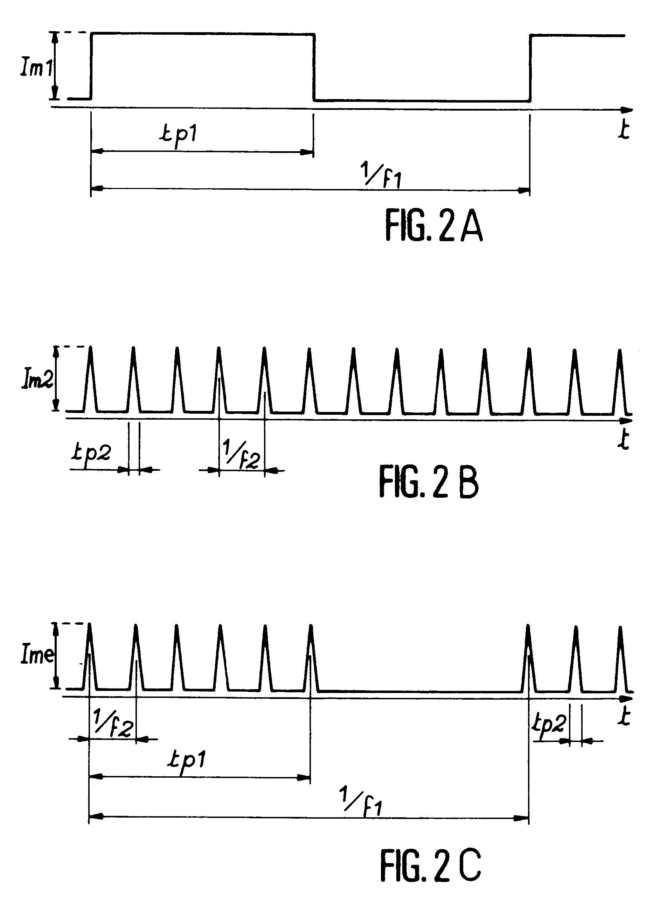

On a représenté ceci sur les figures 2A à 2C.

Sur la figure 2A, on aperçoit les impulsions lumineuses correspondant au premier rayonnement infrarouge 6. L'intensité crête de ces impulsions est notée Im1, la durée de chacune de ces impulsions est notée tp1 et la fréquence des impulsions est notée f1, t représentant le temps.

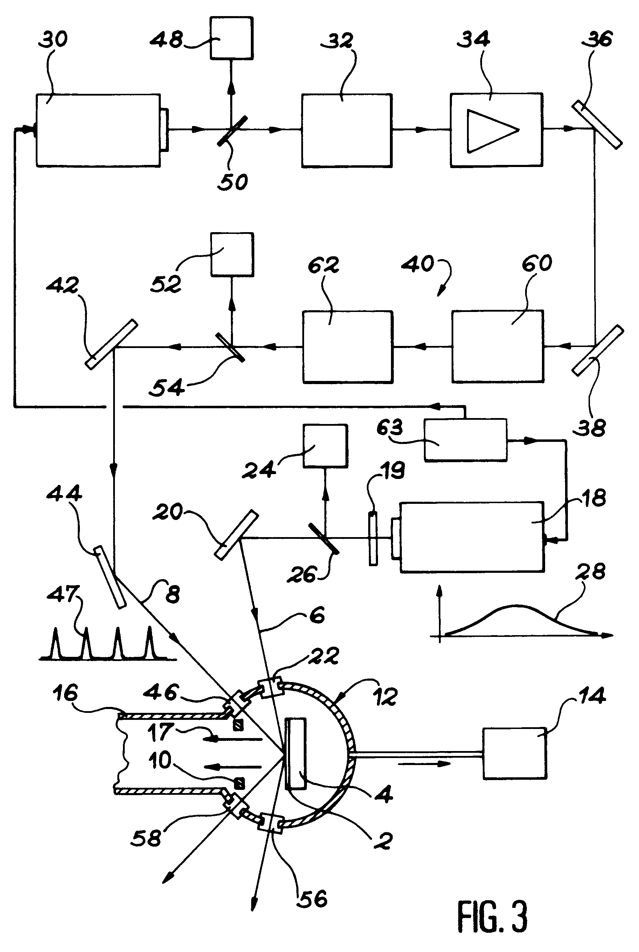

En fait, les impulsions du premier rayonnement, représentées sous la forme d'un créneau, n'ont pas rigoureusement cette forme, mais une forme plus arrondie (voir figure 3).

Sur la figure 2B, on a représenté les impulsions du second rayonnement dont l'intensité crête est notée Im2, la durée tp2 et la fréquence f2.

Sur la figure 2C, sont représentées les impulsions du courant électronique produit. Il s'agit de trains d'impulsions dont la durée est de l'ordre de tp1, la fréquence de ces trains d'impulsions étant de l'ordre de f1. Chaque train d'impulsion est une suite périodique d'impulsions dont la durée est de l'ordre de tp2 et la fréquence de l'ordre de f2, l'intensité crête de ces impulsions étant notée Ime.

Revenant à la figure 1, la cible 2, qui joue le rôle de photocathode, est polarisée négativement, grâce à des moyens de polarisation électrique non représentés, par rapport à une anode 10 de forme annulaire adaptée à l'utilisation des électrons produits, l'axe de l'anode étant perpendiculaire à la surface de la cible et se trouvant en regard de cette surface.

Le champ électrique résultant de cette polarisation permet d'entraîner les électrons produits par le procédé de l'invention, suivant la direction qui est perpendiculaire à la surface de la cible et dans le sens allant de cette cible vers l'anode que les électrons traversent. Cette polarisation est par exemple telle que le champ électrique qui en résulte soit au plus égal à environ $0,1 \text{ MV} \cdot \text{cm}^{-1}$.

A titre purement illustratif et nullement limitatif, la partie "active" de la surface de la cible, partie qui est atteinte par les deux rayonnements, a une surface d'environ 1 cm² ou plus si nécessaire.

Sur la figure 3, on a représenté schématiquement et de façon plus détaillée le dispositif de la figure 1. Ce dispositif comprend une enceinte 12 munie de moyens 14 permettant d'y créer un ultravide (c'est-à-dire une pression inférieure à $10^{-7}$ Pa et par exemple de l'ordre de $5 \cdot 10^{-8}$ Pa), et, à l'intérieur de cette enceinte, la cible 2 sur son support 4 ainsi que l'anode 10. L'enceinte 12 se prolonge par exemple par une canalisation 16 dans laquelle peut circuler le faisceau 17 d'électrons formé. Des moyens d'optique électronique non représentés peuvent être prévus dans cette canalisation 16 pour le traitement de ce faisceau d'électrons (focalisations, accélérations, déviations,...). La canalisation 16 pourrait être un élément d'un injecteur d'électrons pour accélérateur de particules.

Le dispositif représenté sur la figure 3 comprend également un laser 18 apte à émettre dans le domaine de l'infrarouge et commandé de façon à émettre un premier rayonnement pulsé. Ce rayonnement est polarisé linéairement grâce à des moyens appropriés 19 puis dévié par un miroir approprié 20 qui l'envoie sous une incidence rasante de 85° par exemple sur la cible 2, à travers un hublot 22 transparent au rayonnement infrarouge et prévu sur la paroi de l'enceinte 12.

Sur la figure 3, on aperçoit également des moyens classiques 24 de mesure du faisceau produit par le laser 18, une petite partie de ce dernier étant envoyée en direction des moyens 24 grâce à une lame semi-réfléchissante 26 placée, à la suite des moyens 19, sur la trajectoire du faisceau issu du laser 18. Ce laser 18, les moyens 19, la lame 26 et le miroir 20 sont agencés de façon que le plan de polarisation du rayonnement 6 incident sur la cible 2 contienne une normale à la surface de cette cible.

On voit aussi sur la figure 3 l'une 28 des impulsions lumineuses que le laser 18 est capable d'émettre.

Le dispositif représenté sur la figure 3 comprend également un second laser 30 continu, à modes verrouillés, suivi de moyens de déclenchement (Q-switching) 32 prévus pour la réalisation de trains d'impulsions-laser de durée limitée. Ces moyens 32 sont suivis par un amplificateur-laser 34 prévu pour amplifier l'intensité du rayonnement issu des moyens 32. Le rayonnement amplifié fourni par l'amplificateur-laser 34 est ensuite envoyé par l'intermédiaire de miroirs appropriés 36, 38 sur des moyens 40 prévus pour doubler et/ou tripler la fréquence optique du laser 30 afin d'obtenir ledit second rayonnement 8 (figure 1).

Ce dernier est ensuite envoyé par l'intermédiaire de miroirs appropriés 42, 44, sur la cible 2, avec un angle d'incidence par exemple égal à 45°, à travers un hublot 46 transparent à ce rayonnement et prévu sur la paroi de l'enceinte 12.

On voit également sur la figure 3 quelques unes des impulsions 47 du second rayonnement et l'on a également représenté sur cette figure des moyens 48 de mesure du faisceau issu du laser 30, qui reçoivent une petite partie de celui-ci grâce à une lame semi-réfléchissante 50 placée sur la trajectoire de ce faisceau ainsi que d'autres moyens 52 de mesure du faisceau issu des moyens 40, une partie de ce faisceau étant envoyée en direction des moyens 52 grâce à une lame semi-réfléchissante 54 placée à la sortie des moyens 40.

D'autres hublots 56, 58, sont également prévus sur la paroi de l'enceinte 12 pour être traversés respectivement par le premier et le second rayonnements après réflexion de ceux-ci sur la cible 2 afin d'effectuer des mesures sur ceux-ci si nécessaire.

A titre purement indicatif et nullement limitatif, le laser 18 est un laser à $CO_2$, pulsé, polarisé, fournissant un rayonnement pulsé de 10,6 μm (micromètres) de longueur d'onde, dont les impulsions ont une intensité crête de 1 MW · cm$^{-2}$, une durée de l'ordre de 10 microsecondes et une fréquence comprise entre 100 Hz et 1 kHz, le diamètre du faisceau issu de ce laser étant de l'ordre de 7 millimètres ; le laser 30 est un laser Nd : YAG continu à modes verrouillés, fournissant un rayonnement dont la longueur d'onde est 1,06 μm (micromètre) ; les moyens 32 de déclenchement sont constitués par une cellule de Pockels prévue pour que la durée des trains d'impulsions soit comprise entre 10 et 100 μs (microsecondes) ; l'amplificateur-laser 34 est prévu pour amplifier le rayonnement issu des moyens de déclenchement de telle façon que l'amplitude maximale des impulsions correspondantes soit de l'ordre de 50 kW · cm$^{-2}$ ; les

moyens de conversion 40 sont constitués par un moyen 60 permettant de doubler la fréquence du rayonnement initial pour fournir un rayonnement d'environ 0,53 μm (micromètre) de longueur d'onde, ces moyens 60 étant suivis d'un moyen de mixage 62 capable de fournir un rayonnement de fréquence trois fois plus grande que la fréquence du rayonnement issu du laser 30, la longueur d'onde du second rayonnement 8 envoyé sur la cible étant ainsi de l'ordre de 0,355 μm (micromètre) ; les impulsions de ce second rayonnement ont une durée de 200 ps (picosecondes) et une fréquence de répétition d'environ 100 MHz.

Bien entendu, le dispositif représenté sur la figure 3 comprend des moyens 63, réalisables par l'homme du métier, pour commander le fonctionnement simultané des deux lasers 18 et 30.

La figure 4 illustre schématiquement et partiellement un autre dispositif conforme à l'invention dans lequel on utilise une cible constituée par une couche mince 64 formée sur une face d'un substrat 66 qui est transparent au second rayonnement. Celui-ci peut être envoyé sur la couche mince 64, à travers le substrat 66, par l'intermédiaire d'un guide de lumière 68 approprié dont une extrémité se trouve en regard de l'autre face du substrat 66.

Le premier rayonnement 6 est envoyé sous incidence rasante sur la surface libre 65 de la couche mince 64.

Cette couche mince 64 est électriquement polarisée négativement par rapport à l'anode 10 dont l'axe est perpendiculaire à la surface libre de la couche mince 64 (supposée sensiblement plane) et qui est disposée en regard de celle-ci.

A titre purement illustratif et nullement limitatif, on peut utiliser soit une cible massive en un métal tel que le tungstène ou une cible en antimoniure de césium (figure 1), soit une cible en forme de couche mince en or déposée sur un substrat de quartz ou de silice fondue (figure 4) et, pour un second rayonnement appartenant au domaine visible, le guide de lumière 68 est constitué par un faisceau de fibres optiques tandis que pour un second rayonnement appartenant au domaine ultra-violet, ce guide de lumière est soit un simple tube creux métallique, soit un faisceau de fibres optiques en quartz.

D'une manière générale, le matériau de la cible peut être choisi dans le groupe comprenant le tungstène, l'antimoniure de césium, l'aluminium, le zinc, le cuivre, l'argent, l'or, l'hafnium et l'uranium, ces deux derniers ayant des fonctions de travail photoélectrique relativement basses. Tous ces matériaux peuvent être utilisés en couches minces.

On notera que le dispositif de la figure 3 peut être facilement adapté à la réalisation de la figure 4, en prévoyant sur l'enceinte 12 un passage étanche pour le guide de lumière 68.

## Revendications

1. Procédé d'émission d'électrons de grande intensité, de préférence de l'ordre de 200 à 300 A · cm$^{-2}$, comprenant l'envoi, sous incidence rasante, d'un premier rayonnement (6) du domaine infrarouge proche ou lointain, polarisé rectilignement, sur une cible (2 ; 64) faite d'un matériau non électriquement isolant et, simultanément, l'envoi sur ladite cible, sous incidence non rasante, d'un second rayonnement (8) du domaine visible ou ultraviolet, et de telle façon qu'une même zone de la cible soit atteinte par le premier et le second rayonnements, le plan de polarisation du premier rayonnement étant en outre tel qu'il contienne une normale à ladite zone, cette zone produisant alors des électrons.

2. Procédé selon la revendication 1, caractérisé en ce que le premier et le second rayonnements sont en outre pulsés.

3. Procédé selon la revendication 2, caractérisé en ce que le premier rayonnement est pulsé à une fréquence de l'ordre de 100 Hz à 1 kHz et en ce que le second rayonnement est pulsé à une fréquence de l'ordre de 1 MHz à 3 GHz.

4. Procédé selon l'une quelconque des revendications 2 et 3, caractérisé en ce que la durée des impulsions du second rayonnement est au plus égale à environ 1 ns.

5. Procédé selon l'une quelconque des revendications 2 à 4, caractérisé en ce que l'intensité maximale des impulsions du premier rayonnement est de l'ordre de 1 MW · cm$^{-2}$ à 5 GW · cm$^{-2}$ et en ce que l'intensité maximale des impulsions du second rayonnement est de l'ordre de 1 kW · cm$^{-2}$ à 1 MW · cm$^{-2}$.

6. Dispositif d'émission d'électrons, de grande intensité, de préférence de l'ordre de 200 à 300 A · cm$^{-2}$, comprenant :

— une cible (2 ; 64) faite d'un matériau non électriquement isolant,

— un premier moyen (18, 19) prévu pour produire un premier rayonnement du domaine infrarouge proche ou lointain, polarisé rectilignement, et envoyer celui-ci sur la cible, et

— un second moyen (30, 32, 34, 40) prévu pour produire un second rayonnement du domaine visible ou ultraviolet et envoyer celui-ci sur la cible,

le premier et le second moyens étant agencés de telle façon que le premier et le second rayonnements puissent atteindre une même zone de la cible, le plan de polarisation du premier rayonnement étant en outre tel qu'il contienne une normale à ladite zone, de telle sorte que cette zone émet des électrons lorsque le premier et le second rayonnements (8) sont envoyés simultanément sur la cible.

7. Dispositif selon la revendication 6, caractérisé en ce que la cible est une couche mince (64) dudit matériau, déposée sur un substrat (66) transparent au second rayonnement (8), en ce que le premier moyen est prévu pour envoyer le premier rayonnement (6) sur la face libre (65) de la couche mince et en ce que le second moyen est prévu pour envoyer le second rayonnement sur la cible à travers le substrat.

8. Dispositif selon l'une quelconque des revendications 6 et 7, caractérisé en ce que le premier (18, 19) et le second (30, 32, 34, 40) moyens sont prévus pour produire des rayonnements pulsés.

9. Dispositif selon la revendication 8, caractérisé en ce que le premier moyen comprend un premier laser (18) qui est pulsé, apte à émettre dans le domaine infrarouge proche ou lointain et muni de moyens (19) de polarisation rectiligne du rayonnement qu'il est capable d'émettre.

10. Dispositif selon la revendication 9, caractérisé en ce que le second moyen comprend un second laser (30) qui est continu et à modes verrouillés et qui est suivi successivement :

— de moyens (32) de déclenchement du second laser,

— de moyens (34) d'amplification de l'intensité du rayonnement issu des moyens de déclenchement, et

— de moyens (40) d'augmentation de la fréquence de ce rayonnement.

11. Dispositif selon l'une quelconque des revendications 6 à 10, caractérisé en ce que le matériau de la cible est choisi dans le groupe comprenant le tungstène, l'antimoniure de césium, l'aluminium, le zinc, le cuivre, l'or, l'argent, l'hafnium et l'uranium.

## Patentansprüche

1. Verfahren zur Emission von Elektronen mit einer hohen Intensität, vorzugsweise in der Größenordnung von 200 bis 300 Acm$^{-2}$, welches umfaßt : das Senden unter streifendem Einfall einer ersten Strahlung (6) aus dem nahen oder fernen Infrarotbereich, die linear polarisiert ist, auf ein Target (2 ; 64) aus einem elektrisch nicht isolierenden Material und gleichzeitig das Senden unter einem nicht streifenden Einfall einer zweite Strahlung (8) aus dem sichtbaren oder Ultraviolettbereich auf das Target, und zwar derart, daß derselbe Bereich des Targets von der ersten und der zweiten Strahlung getroffen wird, wobei die Polarisationsebene der ersten Strahlung außerdem derart ist, daß sie eine Normale zu diesem Bereich enthält, wobei dieser Bereich dann die Elektronen erzeugt.

2. Verfahren nach Anspruch 1, dadurch gekennzeichnet, daß die erste und die zweite Strahlung gepulst sind.

3. Verfahren nach Anspruch 2, dadurch gekennzeichnet, daß die erste Strahlung mit einer Frequenz der Ordnung von 100 Hz bis 1 kHz und daß die zweite Strahlung mit einer Frequenz der Ordnung von 1 MHz bis 3 GHz gepulst ist.

4. Verfahren nach einem der Ansprüche 2 und 3, dadurch gekennzeichnet, daß die Dauer der Impulse der zweiten Strahlung höchstens 1 ns beträgt.

5. Verfahren nach einem der Ansprüche 2 bis 4, dadurch gekennzeichnet, daß die maximale Impulsintensität der ersten Strahlung in der Größenordnung von 1 MW cm$^{-2}$ bis 5 GW cm$^{-2}$ liegt und daß die maximale Intensität der Impulse der zweiten Strahlung in der Größenordnung von 1 kWcm$^{-2}$ bis 1 MWcm$^{-2}$ liegt.

6. Vorrichtung zur Emission von Elektronen mit einer hohen Intensität vorzugsweise in der Größenordnung von 200 bis 300 Acm$^{-2}$, welche umfaßt :
— ein Target (2 ; 64) aus einem elektrisch nicht isolierendem Material,
— eine erste Vorrichtung (18, 19), die vorgesehen ist zur Erzeugung einer ersten Strahlung aus dem nahen oder fernen Infrarotbereich, die linear polarisiert ist, und zum Senden derselben auf das Target, und
— eine zweite Vorrichtung (30, 32, 34, 40), die vorgesehen ist zur Erzeugung einer zweiten Strahlung aus dem sichtbaren oder Ultraviolettbereich, und zum Senden derselben auf das Target,
wobei die erste und zweite Vorrichtung derart bewegt werden, daß die ersten und zweiten Strahlung ein und denselben Bereich auf dem Target erreichen können, wobei die Polarisationsebene der ersten Strahlung außerdem derart ist, daß sie eine Normale zu dem Bereich enthält, so daß dieser Bereich Elektronen emittiert, wenn die erste und die zweite Strahlung (8) gleichzeitig auf das Target gesendet werden.

7. Vorrichtung nach Anspruch 6, dadurch gekennzeichnet, daß das Target eine dünne Schicht (64) des besagten Materials ist, die auf einem für die zweite Strahlung (8) transparenten Substrat (66) abgeschieden ist, und daß die erste Vorrichtung vorgesehen ist, die erste Strahlung (6) auf die freie Seite (65) der dünnen Schicht zu senden, und daß die zweite Vorrichtung vorgesehen ist, die zweite Strahlung durch das Substrat auf das Target zu senden.

8. Vorrichtung nach einem der Ansprüche 6 und 7, dadurch gekennzeichnet daß die erste (18, 19) und die zweite (30, 32, 34, 40) Vorrichtung vorgesehen sind, um gepulste Strahlungen zu erzeugen.

9. Vorrichtung nach Anspruch 8, dadurch gekennzeichnet, daß die erste Vorrichtung einen ersten Laser (18) umfaßt, der gepulst ist und geeignet ist, im nahen oder fernen Infrarotbereich zu emittieren, und mit einer Vorrichtung (19) zur linearen Polarisation der Strahlung, die zu emittieren er in der Lage ist, versehen ist.

10. Vorrichtung nach Anspruch 9, dadurch gekennzeichnet, daß die zweite Vorrichtung einen zweiten Laser (30) umfaßt, der im Dauerstrich und mit verriegelten Moden arbeitet und der der Reihe gefolgt wird von :
— einer Vorrichtung (32) zum Zünden des zweiten Lasers,
— einer Vorrichtung (34) zur Verstärkung der Intensität der von der Zündvorrichtung erzeugten Strahlung, und
— einer Vorrichtung (40) zum Erhöhen der Frequenz dieser Strahlung.

11. Vorrichtung nach einem der Ansprüche 6 bis 10, dadurch gekennzeichnet, daß das Material des Targets aus der Gruppe ausgewählt ist, die Wolfram, Antimon, Cäsium, Aluminium, Zink, Kupfer, Gold, Silber, Hafnium und Uran umfaßt.

**Claims**

1. Process for the emission of high intensity electrons, preferably approximately 200 to 300 A · cm$^{-2}$, comprising supplying under a glancing incidence of a first radiation (6) of the near or far infrared range which is linearly polarized to a target (2, 64) made from not electrically insulating material and simultaneously supplying to said target under a non-glancing incidence a second radiation (8) of the visible or ultraviolet range, in such a way that the same zone of the target is reached by the first and second radiations, the polarizing plane of the first radiation also being such that it contains a perpendicular to said zone, said zone then producing electrons.

2. Process according to claim 1, characterized in that the first and second radiations are also pulsed.

3. Process according to claim 2, characterized in that the first radiation is pulsed at a frequency of approximately 100 Hz to 1 kHz and in that the second radiation is pulsed at a frequency of approximately 1 MHz to 3 GHz.

4. Process according to either of the claims 2 and 3, characterized in that the duration of the pulses of the second radiation is at the most equal to approximately 1 ns.

5. Process according to any one of the claims 2 to 4, characterized in that the maximum intensity of the pulses of the first radiation is approximately 1 MW·cm$^{-2}$ to 5 GW · cm$^{-2}$ and that the maximum intensity of the pulses of the second radiation is approximately 1 kW · cm$^{-2}$ to 1 MW · cm$^{-2}$.

6. Apparatus for the emission of high intensity electrons, preferably approximately 200 to 300 A·cm$^{-2}$, comprising a target (2, 64) made from a material which is not electrically insulating, a first means (18, 19) for producing a first radiation of the near or far infrared range, which is linearly polarized and which is supplied to the target and a second means (30, 32, 34, 40) for producing a second radiation of the visible or ultraviolet range and which is supplied to the target, the first and second means being arranged in such a way that the first and second radiations can reach a same zone of the target, the polarizing plane of the first radiation also being such that it contains a perpendicular to said zone, in such a way that said zone emits electrons when the first and second radiations (8) are simultaneously supplied to the target.

7. Apparatus according to claim 6, characterized in that the target is a thin film (64) of said material, deposited on a substrate (66) transparent to the second radiation (8), the first means is provided for supplying the first radiation (6) to the free face (65) of the thin film and the second means is provided for supplying the second radiation to the target through the substrate.

8. Apparatus according to either of the claims 6 and 7, characterized in that the first (18, 19) and second (30, 32, 34, 40) means are provided for producing pulsed radiations.

9. Apparatus according to claim 8, characterized in that the first means comprises a first laser (18) which is pulsed and able to emit in the near or far infrared range and which is provided with means (19) for linearly polarizing the radiation which it is able to emit.

10. Apparatus according to claim 9, characterized in that the second means comprises a second laser (30), which is continuous and in locked mode form and which is successively followed by Q-switching means (32) for the second laser, means (34) for amplifying the intensity of the radiation from the Q-switching means and means (40) for increasing the frequency of said radiation.

11. Apparatus according to any one of the claims 6 to 10, characterized in that the target material is chosen from the group including tungsten, cesium antimonide, aluminium, zinc, copper, gold, silver, hafnium and uranium.

FIG. 1

FIG. 4

EP 0 298 817 B1

FIG. 2 A

FIG. 2 B

FIG. 2 C

10

FIG. 3